# EUROPEAN PATENT APPLICATION

(11) **EP 1 361 537 A1**
(43) Date of publication of application: **12.11.2003**
(21) Application number: 02010057.4
(22) Date of filing: 06.05.2002
(51) Int. Cl.: G06K 11/08

(54) **Wireless optical mouse**

(71) Applicant: Unity Opto Technology Co., Ltd., San Chung City, Taipei Hsien, Taiwan (TW)
(72) Inventor: Chin, Yuan-Cheng, Hsintien City, Taipei Hsien (TW)
(74) Representative: Winkler, Andreas, Dr.

(57) **Abstract**

A wireless optic mouse includes a casing (2) inside which an optic module (3), a wireless communication unit (4) and a built-in power source (5) are arranged. The power source (5) powers the optic module (3) and the wireless communication unit (4). The optic module includes an infrared light emitting diode (31) capable to emit an infrared signal of wavelength between 800-1,000nm and a sensor (32) for receiving the infrared signal that is reflected by a desk surface. The sensor (32) generates a signal in response to the infrared optic signal received and applies the signal to the wireless communication unit that transmits the signal to a host computer in a wireless manner. The operation of the optic module is based on the infrared light that requires low power consumption but provides a high precision. Thus the service life of the power source is extended. The wireless communication between the mouse and the host computer realizes excellent mobility of the mouse.

## Description

### FIELD OF THE INVENTION

The present invention generally relates to a computer mouse, and in particular to a wireless optic mouse having an infrared based optic module for power saving purposes.

### BACKGROUND OF THE INVENTION

Optic mice are widely used, partly to replace the conventional mechanical mice due to the better sensitivity of the optic mice. An example of the optic mice is disclosed in US Patent No. 6,281,882. The construction of the conventional optic mouse is shown in Figures 8 and 9 of the attached drawings, comprising a casing (not shown) having a bottom opening in which a bottom board 91 is secured. A lens system 92 and a circuit board 93 are arranged inside the casing and supported by the bottom board 91. The circuit board 93 comprises a control circuit in the form of an integrated circuit (IC) that is not shown in the drawings and a light emitting diode (LED) 94 and an optic sensor 95 substantially opposite to each other. The LED 94 emits a light transmitting through a first lens 921 of the lens system 92 and reflected by a reflector 923 to for example a desk surface 96. The light is reflected by the desk surface 96 toward a second lens 922 of the lens system 92 and directed by the second lens 922 toward the sensor 95.

The conventional optic mouse employs visible light LED. The visible light LED consumes a lot of power during its operation.

Another type of computer mice that is currently known is a wireless mouse that comprises a built-in power source whereby it is operative in a wireless manner. The wireless mouse comprises means for automatically cutting off power supplied from the built-in power source in order to reduce power consumption. The power saving means is effective in cutting off power consumption of the mouse. However, such a computer mouse is in general a mechanical mouse that has poor precision and resolution as compared with the optic mouse but has a better mobility.

It is thus desired to have a wireless optic mouse having low power consumption for overcoming the above problems.

### SUMMARY OF THE INVENTION

An object of the present invention is to provide a wireless optic mouse that possesses the advantages of both the conventional wireless mouse and optic mouse.

Another object of the present invention is to provide a wireless optic mouse employing infrared LED for reducing power consumption and thus extending the service life of a built-in power source.

To achieve the above objects, in accordance with the present invention, there is provided a wireless optic mouse comprising a casing inside which an optic module, a wireless communication unit and a built-in power source are arranged. The power source powers the optic module and the wireless communication unit. The optic module comprises an infrared light emitting diode capable to emit an infrared signal of wavelength between 800-1,000nm and a sensor for receiving the infrared signal that is reflected by a desk surface. The sensor generates a signal in response to the infrared optic signal received and applies the signal to the wireless communication unit that transmits the signal to a host computer in a wireless manner. The operation of the optic module is based on the infrared light that requires low power consumption but provides a high precision. Thus the service life of the power source is extended. The wireless communication between the mouse and the host computer realizes excellent mobility of the mouse.

### BRIEF DESCRIPTION OF THE DRAWINGS

The present invention will be apparent to those skilled in the art by reading the following description of the preferred embodiments thereof, with reference to the attached drawings, in which:

Figure 1 is a side elevational view, partially broken, of a wireless optic mouse constructed in accordance with a first embodiment of the present invention;

Figure 2 is an exploded view of the wireless optic mouse of the first embodiment of the present invention;

Figure 3 is a side elevational view of a portion of the wireless optic mouse in practical operation;

Figure 4 is a side elevational view; partially broken, of a wireless optic mouse constructed in accordance with a second embodiment of the present invention;

Figure 5 is a perspective view of an optic module of a wireless optic mouse constructed in accordance with a third embodiment of the present invention;

Figure 6 is a perspective view of an optic module of a wireless optic mouse constructed in accordance with a fourth embodiment of the present invention;

Figure 7 is a side elevational view, partially broken, of a wireless optic mouse constructed in accordance with a fifth embodiment of the present invention;

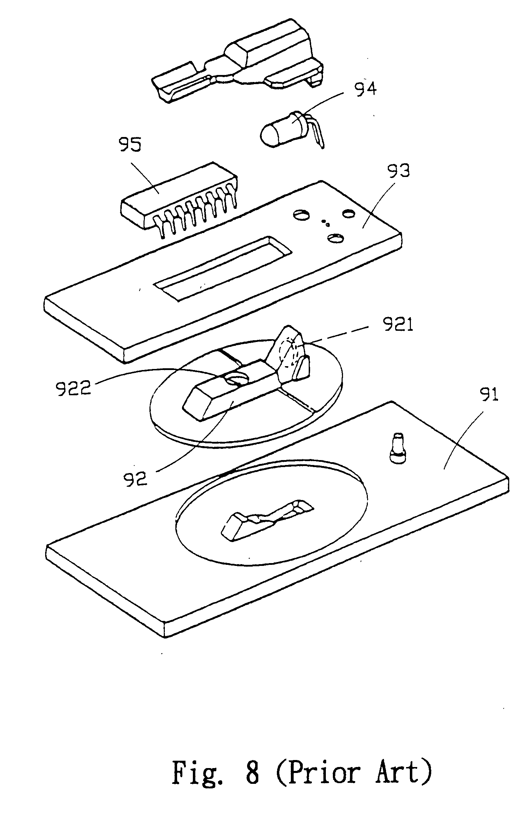

Figure 8 is an exploded view of a conventional optic mouse with a casing removed; and

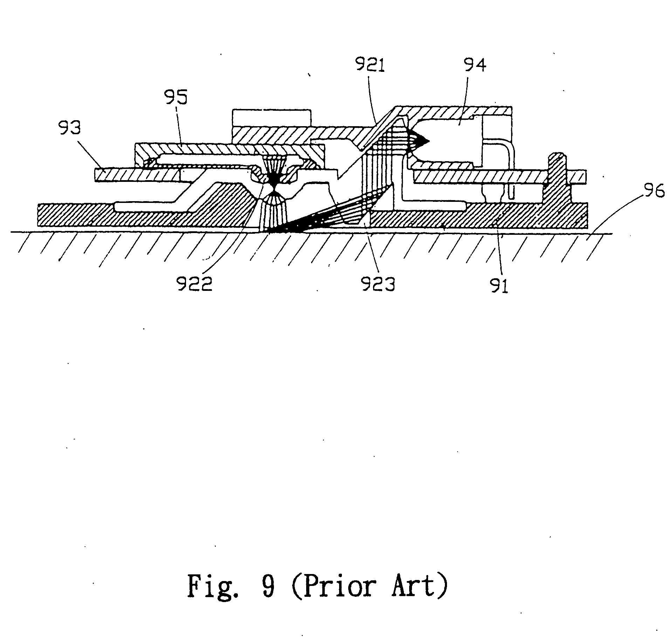

Figure 9 is a cross-sectional view of the conventional optic mouse of Figure 8.

### DETAILED DESCRIPTION OF THE PREFERRED EMBODIMENTS

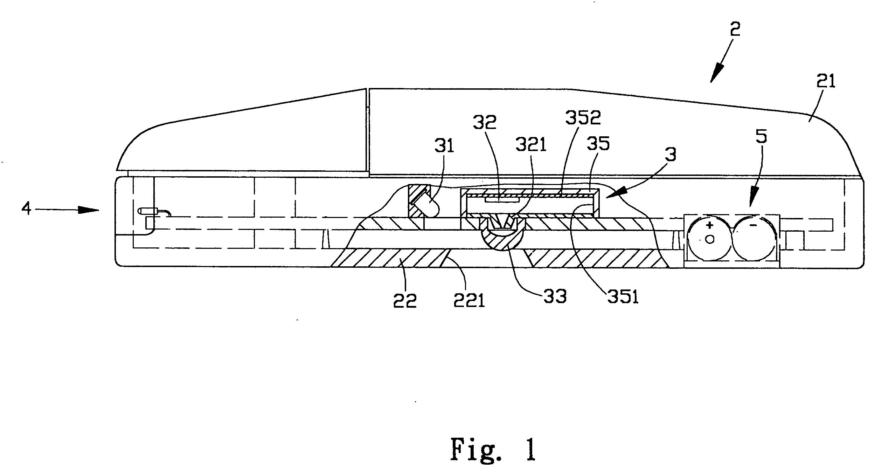

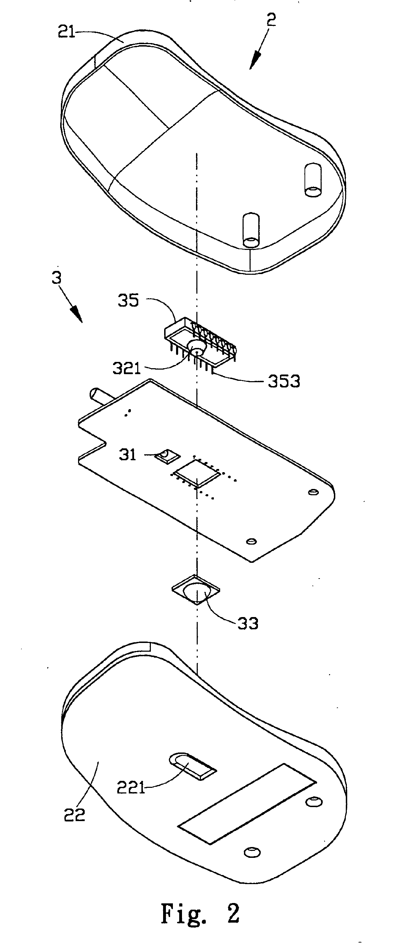

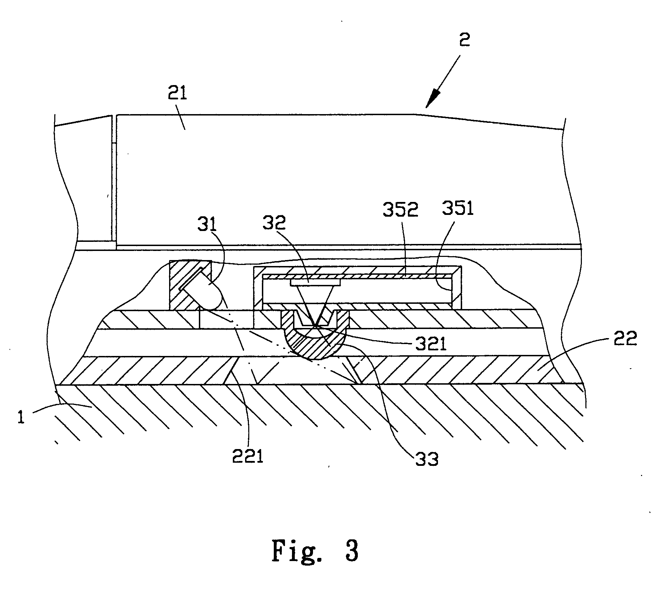

With reference to the drawings and in particular to Figures 1-3, a wireless optic mouse constructed in accordance with a first embodiment of the present invention comprises a casing 2 consisting of an upper casing member 21 and a lower casing member 22 defining an interior space therebetween. A bore 221 is defined in the lower casing member 22. An optic module 3 is arranged in the interior space of the casing 2, comprising a light emitting diode (LED) 31 and an optic sensor 32 having a receiving unit 321. The LED 31 is arranged to have a light emitted therefrom projected through the bore 221 and toward a reflective surface 1, such as a desk. The optic sensor 32 is arranged to receive the light reflected from the surface 1. The reflected light is detected by the receiving unit 321 of the optic sensor 32.

In the embodiment illustrated, the LED 31 of the optic module 3 emits an infrared light having a wavelength between 800-1,000nm.

A wireless communication unit 4 is arranged inside the casing 2, preferably at a front end of the casing 2. The wireless communication unit 4 is electrically connected to the optic module 3 to receive a signal therefrom. The signal is then transmitted to a host computer (not shown) by the wireless communication unit 4.

A power source 5 is arranged inside the casing 2 for powering the optic module 3 and the wireless communication unit 4. In the embodiment illustrated, the power source 5 comprises cells or batteries. However, it is apparent to those having ordinary skills to replace the cells with any suitable power source. Since the infrared LED 31 can be driven by a voltage lower than that of the visible light LED, power consumption of the infrared LED is lower than that of the visible light LED and apparently, the power source 5 can have an extended service life.

In the embodiment illustrated, the optic module 3 comprises a lens 33 that is arranged inside the casing 2 but positioned outside the receiving unit 321 of the sensor 32 for receiving light emitted from the LED 31. Preferably, the lens 33 has an optic axis coincident with a central axis of the receiving unit 321.

The optic module 3 comprises a packaged body 35 defining an interior space 351 inside which at least one conductor 352 is fixed The packaged body 35 further comprises a number of pin legs 353 that are electrically connected to the conductor 352 The sensor 32 is electrically connected to the conductor 352.

To operate, the LED 31 emits a light or an optic signal that is reflected by a reflective surface 1. The reflected signal transmits through the lens 33 and is received by the receiving unit 321 of the sensor 32. In response thereto, an electrical signal is generated by the optic module 3 and applied to the wireless communication unit 4 to be forwarded to the host computer (not shown).

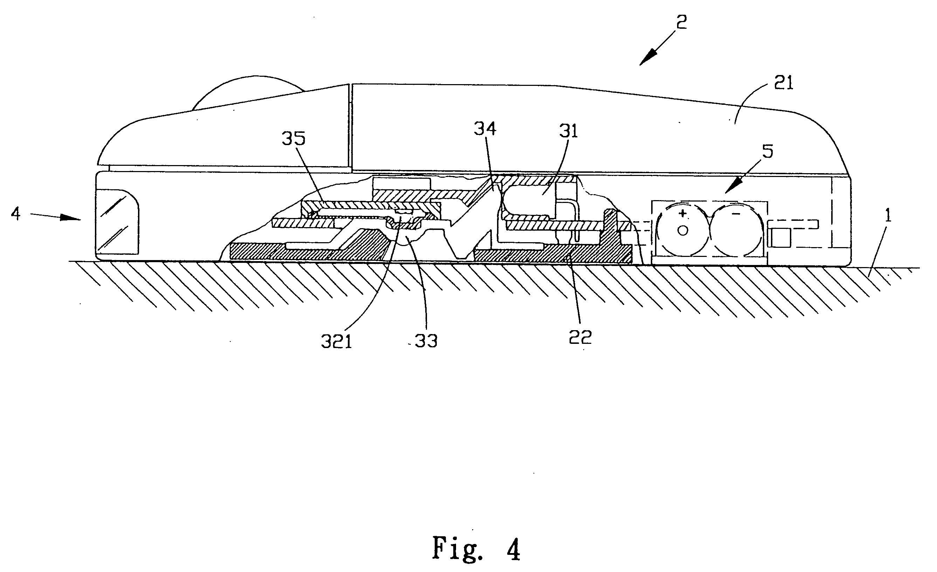

Figure 4 shows a wireless optic mouse constructed in accordance with a second embodiment of the present invention. The optic module 3 of the second embodiment comprises a refractive lens 34 adjacent the LED 31 for guiding the light from the LED 31 toward the reflective surface 1. The reflective surface 1 reflects the light through the lens 33 toward the receiving unit 21 of the sensor 32.

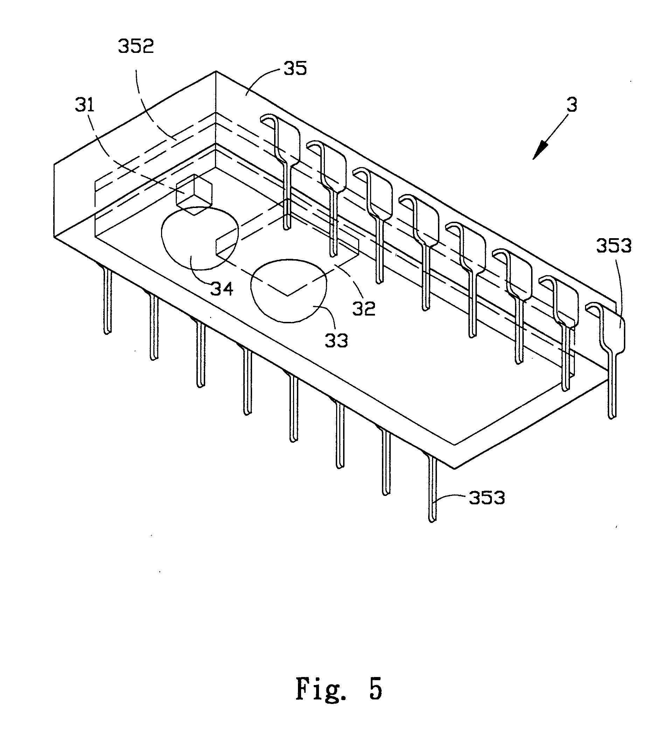

Figure 5 shows an optic module 3 of a wireless optic module constructed in accordance with a third embodiment of the present invention. In the third embodiment, the LED 31, the sensor 32, the lens 33 and the reflector 34 are all integrated in the packaged body 35 as a single unit. This simplifies the overall construction and reduces the costs of manufacturing and assembly.

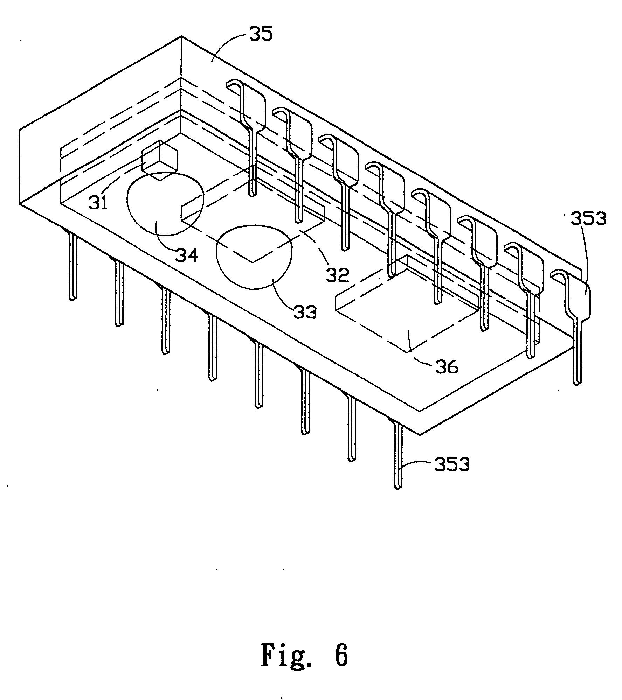

Figure 6 shows an optic module 3 of a wireless optic module constructed in accordance with a fourth embodiment of the present invention. The optic module 3 of the fourth embodiment comprises a control unit 36 which may be for example a control IC, such as a micro-control unit (MCU), arranged inside the interior space 351 of the packaged body 35 and in electrical connection with the conductor 352. If desired, the sensor 32 and the control unit 36 can be integrated together as a single unit.

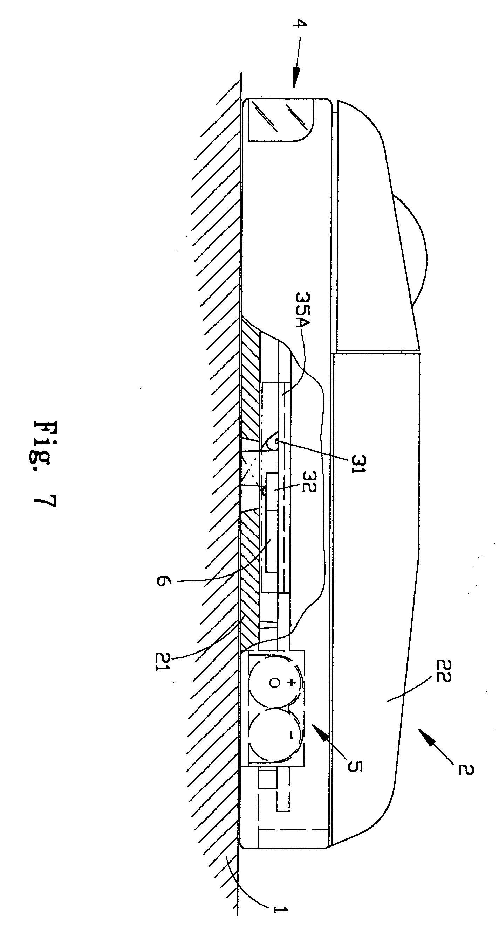

Figure 7 shows a wireless optic mouse constructed in accordance with a fifth embodiment of the present invention. The mouse comprises an optic module 3 having a body 35Aa that is made in the form of a board to support the sensor 32 and the LED 31.

Although the present invention has been described with reference to the preferred embodiments thereof, it is apparent to those skilled in the art that a variety of modifications and changes may be made without departing from the scope of the present invention which is intended to be defined by the appended claims.

The features disclosed in the foregoing description, in the claims and/or in the accompanying drawings may, both separately and in any combination thereof, be material for realising the invention in diverse forms thereof.

## Claims

1. A wireless optic mouse comprising:
a casing defining an interior space, the casing having a bottom in which a bore is defined;
an optic module arranged in the interior space of the casing and comprising a light emitting diode and a sensor having a receiving unit, the light emitting diode being arranged to project an optic signal through the bore, the optic signal being adapted to be reflected back through the bore by an external reflective surface and received by the receiving unit of the sensor, the sensor generating a signal in response to the reflected optic signal received thereby;
a wireless communication unit to which the signal generated by the sensor is applied, the wireless communication unit being adapted to transmit the signal to a host computer; and
a power source arranged inside the casing for powering the optic module and the wireless communication unit;
wherein the optic signal emitted by the light emitting diode is an infrared light having a wavelength of 800-1,000nm.

2. The wireless optic mouse as claimed in Claim 1, wherein the optic module comprises a first lens positioned outside the receiving unit of the sensor for receiving the reflected optic signal and directing the optic signal to the receiving unit of the sensor.

3. The wireless optic mouse as claimed in Claim 2, wherein the optic module comprises a second, refractive lens adjacent the light emitting diode for guiding the optic signal toward the external reflective surface.

4. The wireless optic mouse as claimed in Claim 2, wherein the optic module comprises a packaged body forming an interior space, at least one conductor being arranged in the interior space of the packaged body, the packaged body comprising a number of pin legs in electrical connection with the at least one conductor, the sensor being in electrical connection with the conductor.

5. The wireless optic mouse as claimed in Claim 3, wherein the optic module comprises a packaged body forming an interior space, at least one conductor being arranged in the interior space of the packaged body, the packaged body comprising a number of pin legs in electrical connection with the at least one conductor, the sensor being in electrical connection with the conductor.

6. The wireless optic mouse as claimed in Claim 4, wherein the light emitting diode, the sensor and the first lens are all integrated inside the packaged body as a single unit.

7. The wireless optic mouse as claimed in Claim 5, wherein the packaged body is made in the form of a board.

8. The wireless optic mouse as claimed in Claim 6, wherein the optic module comprises a control unit arranged in the interior space of the packaged body and in electrical connection with the at least one conductor.

9. The wireless optic mouse. as claimed in Claim 7, wherein the optic module comprises a control unit arranged in the interior space of the packaged body and in electrical connection with the at least one conductor.

10. An optic module of a wireless optic mouse comprising a light emitting diode and a sensor having a receiving unit for receiving an optic signal from the light emitting diode, the optic signal being an infrared signal having a wavelength of 800-1,000nm.

11. The optic module as claimed in Claim 10, wherein the mouse comprises a casing inside which the optic module is arranged, the casing having a bottom defining a bore through which the optic signal from the light emitting diode is projected, the optic signal being adapted to be reflected by an external reflective surface and received by the receiving unit of the sensor, the mouse further comprising a wireless communication unit for receiving a signal generated by the sensor in response to the reflected optic signal received by the sensor, the wireless communication unit being adapted to transmit the signal to a host computer, and a power source arranged inside the casing for powering the optic module and the wireless communication unit.

12. The optic module as claimed in Claim 11 further comprising a first lens positioned outside the receiving unit of the sensor for receiving the reflected optic signal and directing the optic signal to the receiving unit of the sensor.

13. The optic module as claimed in Claim 12 further comprising a second, refractive lens adjacent the light emitting diode for guiding the optic signal toward the external reflective surface.

14. The optic module as claimed in Claim 12 further comprising a packaged body forming an interior space, at least one conductor being arranged in the interior space of the packaged body, the packaged body comprising a number of pin legs in electrical connection with the at least one conductor, the sensor being in electrical connection with the conductor.

15. The optic module as claimed in Claim 13 further comprising a packaged body forming an interior space, at least one conductor being arranged in the interior space of the packaged body, the packaged body comprising a number of pin legs in electrical connection with the at least one conductor, the sensor being in electrical connection with the conductor.

16. The optic module as claimed in Claim 14, wherein the light emitting diode, the sensor and the first lens are all integrated inside the packaged body as a single unit.

17. The optic module as claimed in Claim 15, wherein the packaged body is made in the form of a board.

18. The optic module as claimed in Claim 16 further comprising a control unit arranged in the interior space of the packaged body and in electrical connection with the at least one conductor.

19. The optic module as claimed in Claim 17 further comprising a control unit arranged in the interior space of the packaged body and in electrical connection with the at least one conductor.
